# EUROPEAN PATENT APPLICATION

(11) **EP 4 832 289 A1**
(43) Date of publication of application: **28.10.2026**
(21) Application number: 25172670.9
(22) Date of filing: 25.04.2025
(51) Int. Cl.: H02J 1/10, B60L 53/67

(54) **A SYSTEM FOR DISTRIBUTING ELECTRIC POWER FROM A PLURALITY OF DC POWER SOURCES TO A PLURALITY OF DC POWER DISPENSERS**

(71) Applicant: EcoG GmbH, 81825 München (DE)
(72) Inventor: Heuer, Jörg, 82041 Oberhaching (DE)
(74) Representative: Fink Numrich Patentanwälte PartmbB

(57) **Abstract**

The invention refers to a system for distributing electric power from a plurality of DC power sources (C1, C2, ..., C12) to a plurality of DC power dispensers (D1, D2, ..., D10). The system comprises a switching matrix (MA) providing electric connections between the DC power sources (C1, C2, ..., C12) and the DC power dispensers (D1, D2, ..., D10) via powerlines (PL), where the switching matrix (MA) comprises a plurality of switches (SW), where an electric connection between a DC power source (C1, C2, ..., C12) and a DC power dispenser (D1, D2, ..., D10) can be closed and opened by a switch (SW). Furthermore, the system comprises a control means (CO) for controlling the plurality of switches (SW). The switching matrix (MA) comprises several switching modules (SM1, SM2, ..., SM9), where each switching module (SM1, SM2, ..., SM9) has one or more input ports (IN) and several output ports (OU). In each switching module (SM1, SM2, ..., SM9), a respective input port (IN) is electrically connected exclusively to at least two output ports (OU), where the electric connection between the respective input port (IN) and each output port (OU) of the at least two output ports (OU) can be closed and opened by a separate switch (SW) out of the plurality of switches (SW). Each DC power source (C1, C2, ..., C12) is electrically connected to another input port (IN) of one or more switching modules (SM) and each DC power dispenser (D1, D2, ..., D10) is electrically connected to one or more output ports (OU) of one or more switching modules (SM1, SM2, ..., SM9). The control means (CO) and each switching module (SM1, SM2, ..., SM9) can communicate with each other.

## Description

The invention refers to a system for distributing electric power from a plurality of DC power sources to a plurality of DC power dispensers.

It is known from the prior art to use so-called switching matrices for distributing electric power from DC power sources, e.g. AC/DC converters and/or DC/DC converters, to DC power dispensers which provide electric power to corresponding devices, e.g. energy storages. A switching matrix provides a plurality of electric connections via powerlines and comprises switches for opening and closing the electric connections.

Up to now, the switches of a switching matrix are integrated in a single device. This requires changing the device if more DC power sources or more DC power dispensers are added to the system or in case that the number of DC power sources which can be switched on one DC power dispenser should be changed.

It is an object of the invention to provide a system for distributing electric power from a plurality of DC power sources to a plurality of DC power dispensers where the switching matrix of the system can be easily adapted to changes.

This object is solved by the system according to claim 1. Preferred embodiments of the invention are defined in the dependent claims.

The system according to the invention is configured to distribute electric power from a plurality of DC power sources to a plurality of DC power dispensers. The system comprises a switching matrix providing electric connections between the DC power sources and the DC power dispensers via powerlines. The term DC power source is to be interpreted broadly. E.g., a DC power source may comprise several sub power sources (e.g. converters) where all sub power sources are coupled to a single powerline of the switching matrix. In other words, a DC power source as described herein refers to a means providing electric power to a single powerline of the switching matrix. The switching matrix comprises a plurality of switches, where an electric connection between a DC power source and a DC power dispenser can be closed and opened by a switch. The switches can be any elements enabling the opening and closing of an electric connection. In the preferred embodiment, the switches are circuit breakers. The system further comprises a control means for controlling the plurality of switches. The control means can be a single control unit, or it may be implemented by several control units communicating with each other.

The switching matrix of the system according to the invention comprises several switching modules, where each switching module has one or more input ports and several output ports. In each switching module, a respective input port (i.e. each input port) is electrically connected exclusively to at least two output ports, i.e. the respective input port is only connected to the at least two output ports and no other output ports. In a respective switching module, the electric connection between the respective input port and each output port of the at least two output ports can be closed and opened by a separate switch out of the plurality of switches. Preferably, all switches of the plurality of switches are integrated in switching modules.

A switching module is a separate physical device or entity having the above-described input ports and output ports as well as the above-described switches connecting the input ports and output ports. The switches of the switching module may be enclosed by a single housing. In a preferred embodiment, the switching module is a device which is inserted into a corresponding bay of a switching cabinet or rack. One or more racks may be used for accommodating the switching modules of the system.

In the system according to the invention, each DC power source is electrically connected to an input port and preferably exclusively one input port (i.e. an input port exclusively assigned to a respective DC power source) of one or more switching modules and each DC power dispenser is electrically connected to one or more output ports of one or more switching modules. Furthermore, the control means and each switching module can communicate with each other. In other words, a corresponding communication link is provided between the control means and each switching module, e.g. via a communication bus. The communication between the control means and the respective switching modules is necessary so that control means can control the switches within the switching modules.

According to the invention, due to the use of the above-described switching modules, a modular switching matrix is implemented in a power distribution system. By adding switching modules to the switching matrix, new DC power sources and/or DC power dispensers can be integrated into the system without the need to change the complete switching matrix. In prior art systems, the switching matrix is integrated in one device. As a consequence, the device as a whole and thus the complete switching matrix has to be replaced in case of changes with respect to the DC power sources and/or DC power dispensers.

In the preferred embodiment of the invention, the system works in a high-voltage range. I.e., each DC power source of the system provides a voltage between 30 V and 1500 V, preferably between 300 V and 1000 V.

In another preferred variant, one or more DC power sources and preferably all DC power sources each are AC/DC power converters and/or DC/DC power converters. In another preferred embodiment, one or more DC power dispensers and preferably all DC power dispensers each are charging points for charging electric vehicles, i.e. the battery of the electric vehicle. Nevertheless, the DC power dispensers can also be used for charging other types of batteries or energy storages or for delivering power to other loads.

In a particularly preferred embodiment of the invention, the switching matrix of the system may be cascaded. To do so, one or more output ports of at least one switching module are each connected to another input port of one or more switching modules being different from the at least one switching module. Preferably, one or more output ports of at least one switching module are each connected to an input port of another switching module.

In another variant, a respective switching module (i.e. each switching module) includes a control logic controlling its switches such that a DC power source connected to an input port of the respective switching module is electrically connected by not more than one closed electric connection to DC power dispensers. Hence, a failure of the system due to a power supply from one DC power source to several DC power dispensers at the same time is avoided. Preferably, the control logic is implemented as hardware or programmable logic which can be verified according to functionality.

Preferably, the system is configured such that the respective switching module receives from each DC power source connected to its input port or input ports and from each DC power dispenser connected to its output ports a device identification where the respective switching module transmits the device identifications to the control means. This embodiment enables an auto-configuration of the control means because the structure of the switching matrix is communicated to the control means.

In another embodiment, a respective switching module has a device identification, where for at least one type of signal transmitted from the respective switching module to the control means, the device identification is included in the signal. Preferably, the at least one type of signal refers to a service signal indicating that a service is needed for the corresponding switching module. The device identification can be based on the id of the bay the switching module is installed in a switching cabinet. In this case, the bay can be signaled by coding pins to the switching module. An alternative is that the device identification is shown on the installed switching module itself. In a service case, the control means signals the identification of the broken switching module and the service person can identify the switching module on the id of the bay and/or the identifier of the switching module shown thereon.

In another preferred variant, the system is configured such that, via a respective switching module, a shutdown signal can be transmitted from a DC power dispenser connected to an output port of the respective switching module to a DC power source connected to an input port of the respective switching module, the input port having a closed electric connection to the output port. Upon receipt of the shutdown signal, the DC power source is deactivated and after the deactivation of the DC power source, the closed electric connection is opened by the corresponding switch. According to this embodiment, the switch which opens the electric connection in case of a failure in a DC power dispenser operates without electric load applied thereto, avoiding a deterioration of the switch. The shutdown signal may be transmitted by any appropriate signal line. The shutdown signal may be an analog signal or a digital signal.

Besides the above system, the invention refers to a switching module which is configured to operate as a switching module in the system according to the invention or one or more preferred embodiment thereof.

In the following, embodiments of the invention will be described in detail with respect to the accompanying drawings.
Fig. 1 shows a schematic diagram illustrating an embodiment of a system according to the invention;
Fig. 2 shows a detail of another embodiment of the system according to the invention;
Fig. 3 shows a detail of the embodiment of the system of Fig. 1 illustrating triplines.

In the following, an embodiment of the invention will be described with respect to a system for distributing electric power from a plurality of DC power sources in the form of AC/DC converters to a plurality of DC power dispensers in the form of charging points for electric vehicles. However, the system according to the invention may also be used for a power distribution between other types of DC power sources and other types of DC power dispensers.

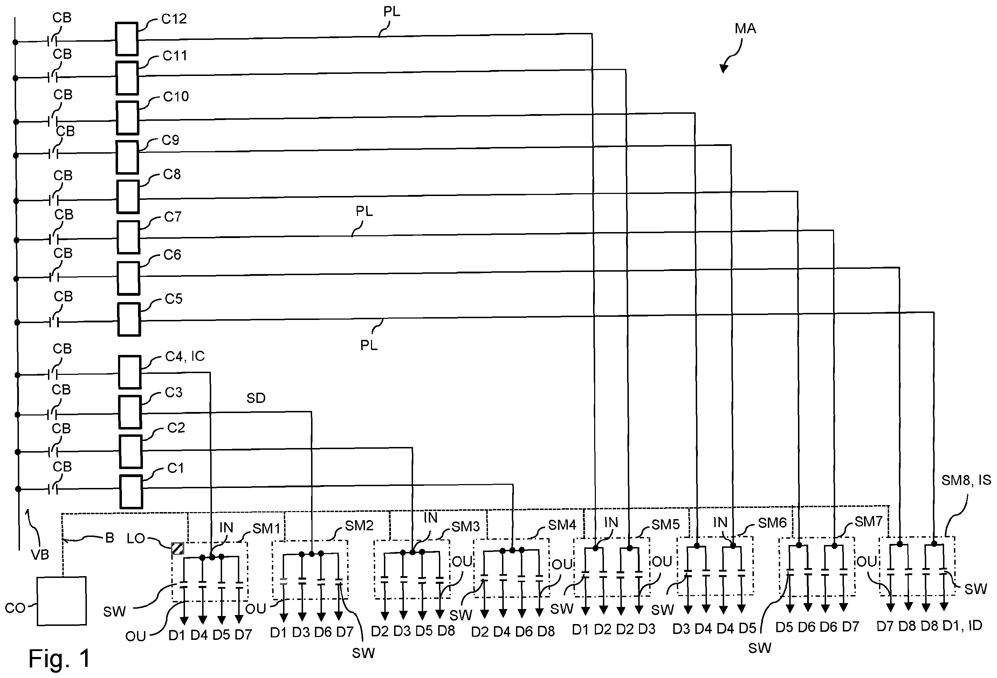

According to Fig. 1, the system comprises 12 DC power sources C1, C2,..., C12 which are AC/DC power converters receiving electric power from a high voltage bus VB. Each DC power source is connected via a circuit breaker CB to the voltage bus VB.

To distribute the power of the DC power sources C1 to C12 to corresponding dispensers D1, D2...., D8, a switching matrix MA is used. The switching matrix MA comprises a plurality of powerlines PL indicated by solid lines in Fig. 1. Only some of the powerlines are designated by the reference sign PL for clarity reasons. The switching matrix MA is the part of the system extending from the plurality of DC power sources C1 to C12 to the plurality of dispensers D1 to D8.

The switching matrix MA comprises 8 switching modules SM1, SM2,..., SM8 indicated by rectangles each having a dash-dotted edge. The switching modules are separate physical entities. Preferably, each switching module has its own housing enclosing the components of the switching module. In the embodiment described herein, each switching module is placed in a tray of a rack. The switching modules each comprise at least one input port IN and four output ports OU. For the sake of clarity, only some of the input ports are designated by reference sign IN and only some of the output ports are designated by reference sign OU.

The switching modules SM1 to SM4 are of a first type having one input port IN and four output ports OU each connected to the input port IN. In each switching module of the first type, there is an electric connection between the input port IN and each output port OU, each electric connection comprising a switch SW in the form of a circuit breaker. The switching modules SM5 to SM8 are of the second type having two input ports IN and four output ports OU. In each switching module of the second type, one input port IN is connected to a pair of output ports OU via a pair of electric connections whereas the other input port IN is connected via another pair of electric connections to another pair of output ports OU. Furthermore, in each switching module of the second type, each electric connection comprises a switch SW in the form of a circuit breaker. For the sake of clarity, only some of the switches within the switching modules are designated by reference sign SW.

Each of the switching modules SM1 to SM8 comprises a control logic LO implemented by hardware or programmable logic. The control logic LO is only shown for the switching module SM1 but is also included in the other switching modules SM2 to SM8. All switching modules are connected via a communication bus B with a central control means CO. The communication lines of the communication bus B are indicated by dashed lines.

Each output port OU of the switching modules SM1 to SM8 is connected to one of the DC power dispensers D1 to D8, and it is allowed that a DC power dispenser is connected to several output ports, as it is the case in Fig. 1. Hence, a DC power dispenser may receive power from several DC power sources. The control means CO manages the distribution of the electric power to the DC power dispensers based on the requirements of the electric vehicles charging at the respective DC power dispensers. To do so, the switching state of the switches SW are controlled in order to deliver power to the respective DC power dispensers charging the batteries of corresponding electric vehicles. In order to avoid a failure of the system, the control means CO ensures that a DC power source is connected at the same time only to one DC power dispenser. Contrary to that, it is allowed that a DC power dispenser is connected to several DC power sources.

The essential feature of the invention resides in the use of switching modules SM1 to SM8 where each switching module has at least one input port IN and several output ports OU, each input port IN being connected to one DC power source. The switches SW of the switching matrix MA are all included in the switching modules. Contrary to that, according to the prior art, the switching matrix MA is included in one device and not distributed over several switching modules.

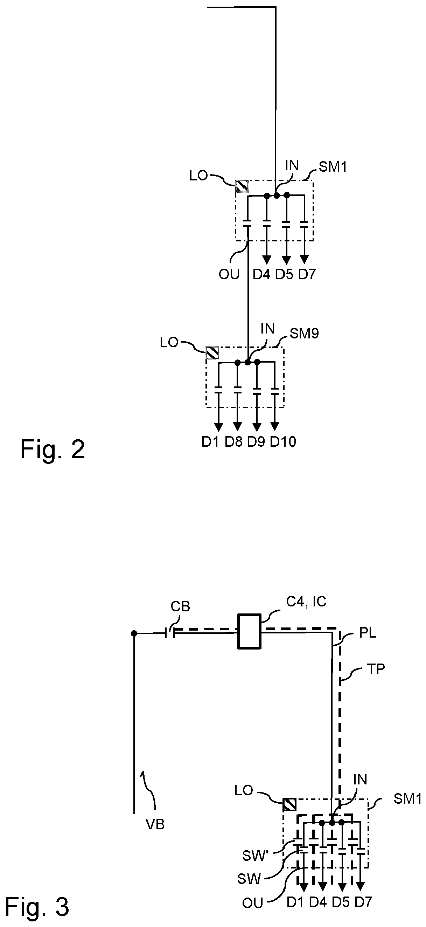

In Fig.2, a detail of a particularly preferred embodiment of the invention is shown where the switching matrix MA of the system is cascaded. To do so, an output port OU of the switching module SM1 is connected to the input port IN of a further switching module SM9, where the output ports of the switching module SM9 are connected to dispensers D1, D8, D9 and D10.

Due to the use of the switching modules, the switching matrix MA may be easily extended by further DC power sources and/or DC power dispensers and/or switching modules increasing the amounts of DC power sources switched to existing DC power dispensers. E.g., in case that an additional DC power source is installed, additional DC power dispensers can be added to the switching matrix MA by a new switching module without any further changes in the switching matrix. Moreover, the switching matrix MA may be cascaded by connecting one or more output ports of the switching modules with an input of further switching modules instead of a connecting the respective output port with a DC power dispenser.

Furthermore, the control logic LO of each switching module is configured to prevent a short circuit between DC power dispensers connected to the respective switching module. To do so, in case that the control logic LO detects a control signal to close two electric connections stemming from the same input port of the respective switching module, one of the closed electric connections is kept opened by the control logic LO.

In the embodiment of Fig. 1, so-called triplines extend from each DC power dispenser in parallel to the powerlines to the corresponding DC power source which is connected with the DC power dispenser. Each switching module is configured such that the triplines from DC power dispensers connected thereto pass through the switching module. Triplines TP (not shown in Fig. 1) are illustrated in Fig. 3 as dashed lines for the switching module SM1 and the DC power source C4. The triplines include switches SW', where each switch SW' is coupled to a corresponding switch SW in the powerlines extending through the switching module. For clarity reasons, only one switch of the triplines TP is designated by reference sign SW' and only one switch in the powerlines of the switching module SM1 (the switch to which the switch SW' is coupled) is designated by reference sign SW. The switching of the switch SW' is synchronized with the switching of the switch SW to which the switch SW' is coupled, i.e. both switches SW and SW' are always in the same switching state (opened or closed). Via the triplines TP, an analog or digital shutdown signal is transmitted from a corresponding DC power dispenser in case of a failure. The shutdown signal is received by the DC power source connected via a closed electric connection within the switching module through which the shutdown signal has passed. As an example, Fig. 1 shows such a shutdown signal SD being transmitted to the DC power source C3. The shutdown signal deactivates the DC power source receiving the shutdown signal. This can be implemented by stopping the power conversion processing of the DC power source or by opening the circuit breaker on the feeding side of the DC power source. In the embodiment described herein, the triplines TP extend to the circuit breakers CB (see Fig. 3). As a consequence, the deactivation of the DC power source is achieved by opening the corresponding circuit breaker CB. In reaction to this deactivation, the control logic LO of the switching module through which the shutdown signal has passed will open the electric connection between the DC power dispenser transmitting the shutdown signal and the deactivated DC power source by the corresponding switch SW. As a consequence, it is avoided that the switch SW changes its switching state under electric load resulting in a deterioration of the switch.

In the embodiment of Fig. 1, each DC power dispenser of the DC power dispensers D1 to D8 and each DC power source of the DC power sources C1 to C12 have a unique device identification. As an example, Fig. 1 depicts one device identification ID for the DC power dispenser D1 and one device identification IC for the DC power source C4. After having established the electric connections based on the switching matrix MA, the DC power dispensers and the DC power sources connected to a respective switching module transmit their device identifications to the respective switching module. The control logic LO of the respective switching module transmits the received device identifications via the communication bus B to the control means CO where the control means knows from which switching module the device identifications originate (e.g. by additionally receiving a device identification of the switching module described below). As a consequence, the control means CO automatically receives the structure of the switching matrix MA and can configure itself to this structure. Hence, an auto-configuration of the control means CO can be achieved due to the transmission of the device identifications from each switching module to the control means CO.

In the embodiment of Fig. 1, each of the switching modules SM1 to SM8 has a device identification as well. As an example, Fig. 1 depicts one device identification IS for the switching module SM8. In case that a service is needed for a corresponding switching module, e.g. due to a defect, the control logic LO of the switching module transmits a signal to the control means CO. This signal includes the device identification of the switching module so that the control means CO receives the information which switching module needs a service. This information may be read out by a user from the control means CO so that the user knows which switching module needs a service or has to be replaced. The device identification can be based on the id of the bay the switching module is installed in a switching cabinet. In this case, the bay can be signaled by coding pins to the switching module. An alternative is that the device identification is shown on the installed switching module itself. In a service case, the control means signals the identification of the broken switching module and the service person can identify the switching module on the id of the bay and/or the identifier of the switching module shown thereon.

The embodiment as described in the foregoing has several advantages. Particularly, a modular switching matrix is established by the use of switching modules. As a consequence, DC power sources and/or DC power dispensers can be added to the system and integrated in the switching matrix via additional switching modules without changing the remaining structure of the switching matrix. Furthermore, the amount of DC power sources able to be switched to one DC power dispenser can be increased.

### List of reference signs

MA switching matrix
VB voltage bus
CB circuit breakers
C1, C2, ..., C12 DC power sources
PL powerlines
D1, D2, ..., D10 DC power dispensers
SM1, SM2, ..., SM9 switching modules
IN input ports
OU output ports
SW switches
B communication bus
CO control means
LO control logic
SD shutdown signal
IC device identification of a DC power source
ID device identification of a DC power dispenser
IS device identification of a switching module
TP tripline
SW' switch of a tripline

## Claims

1. A system for distributing electric power from a plurality of DC power sources (C1, C2, ..., C12) to a plurality of DC power dispensers (D1, D2, ..., D10), where the system comprises a switching matrix (MA) providing electric connections between the DC power sources (C1, C2, ..., C12) and the DC power dispensers (D1, D2, ..., D10) via powerlines (PL), where the switching matrix (MA) comprises a plurality of switches (SW), where an electric connection between a DC power source (C1, C2, ..., C12) and a DC power dispenser (D1, D2, ..., D10) can be closed and opened by a switch (SW), where the system comprises a control means (CO) for controlling the plurality of switches (SW), **characterized in that**
- the switching matrix (MA) comprises several switching modules (SM1, SM2, ..., SM9), where each switching module (SM1, SM2, ..., SM9) has one or more input ports (IN) and several output ports (OU);
- in each switching module (SM1, SM2, ..., SM9), a respective input port (IN) is electrically connected exclusively to at least two output ports (OU), where the electric connection between the respective input port (IN) and each output port (OU) of the at least two output ports (OU) can be closed and opened by a separate switch (SW) out of the plurality of switches (SW);
- each DC power source (C1, C2, ..., C12) is electrically connected to an input port (IN) of one or more switching modules (SM);
- each DC power dispenser (D1, D2, ..., D10) is electrically connected to one or more output ports (OU) of one or more switching modules (SM1, SM2, ..., SM9);
- the control means (CO) and each switching module (SM1, SM2, ..., SM9) can communicate with each other.

2. The system according to claim 1, **characterized in that** each DC power source (C1, C2, ..., C12) provides a voltage between 30 V and 1500 V, preferably between 300 V and 1000 V.

3. The system according to claim 1 or 2, **characterized in that** one or more DC power sources (C1, C2, ..., C12) each are AC/DC power converters and/or one or more DC power sources (C1, C2, ..., C12) each are DC/DC power converters.

4. The system according to one of the preceding claims, **characterized in that** one or more DC power dispensers (D1, D2, ..., D10) each are charging points for charging electric vehicles.

5. The system according to one of the preceding claims, **characterized in that** one or more output ports (OU) of at least one switching module (SM1, SM2, ..., SM9) are each connected to another input port (IN) of one or more switching modules (SM1, SM2, ..., SM9) being different from the at least one switching module (SM1, SM2, ..., SM9).

6. The system according to one of the preceding claims, **characterized in that** a respective switching module (SM1, SM2, ..., SM9) includes a control logic (LO) controlling its switches (SW) such that a DC power source (C1, C2, ..., C12) connected to an input port (IN) of the respective switching module (SM1, SM2, ..., SM9) is electrically connected by not more than one closed electric connection to DC power dispensers (D1, D2, ..., D10).

7. The system according to one of the preceding claims, **characterized in that** the system is configured such that a respective switching module (SM1, SM2, ..., SM9) receives from each DC power source (D1, D2, ..., D10) connected to its input port (IN) or input ports (IN) and from each DC power dispenser (D1, D2, ..., D10) connected to its output ports (OU) a device identification (IC, ID), where the respective switching module (SM1, SM2, ..., SM9) transmits the device identifications (IC, ID) to the control means (CO).

8. The system according to one of the preceding claims, **characterized in that** a respective switching module (SM1, SM2, ..., SM9) has a device identification (IS), where for at least one type of signal transmitted from the respective switching module (SM1, SM2, ..., SM9) to the control means (CO), the device identification (IS) is included in the signal.

9. The system according to one of the preceding claims, **characterized in that** the system is configured such that, via a respective switching module (SM1, SM2, ..., SM9), a shutdown signal (SD) can be transmitted from a DC power dispenser (D1, D2, ..., D10) connected to an output port (OU) of the respective switching module (SM1, SM2, ..., SM9) to a DC power source (C1, C2, ..., C12) connected to an input port (IN) of the respective switching module (SM1, SM2, ..., SM9), the input port (IN) having a closed electric connection to the output port (OU), where the DC power source (C1, C2, ..., C12) is deactivated upon the receipt of the shutdown signal (SD) and the closed electric connection is opened after the deactivation of the DC power source (C1, C2, ..., C12).

10. A switching module, **characterized in that** the switching module (SM1, SM2, ..., SM9) is configured to operate as a switching module (SM1, SM2, ..., SM9) in the system according to one of the preceding claims.
